# EUROPÄISCHE PATENTSCHRIFT

(11) **EP 1 221 075 B1**
(45) Veröffentlichungstag und Bekanntmachung des Hinweises auf die Patenterteilung: **01.10.2003**
(21) Anmeldenummer: 00954449.5
(22) Anmeldetag: 07.07.2000
(51) Int. Cl.: G05B 19/042, G05B 19/418

(54) **VORRICHTUNG ZUM STEUERN VON SICHERHEITSKRITISCHEN PROZESSEN**
METHOD FOR CONTROLLING SAFETY-CRITICAL PROCESSES
DISPOSITIF DE COMMANDE DE PROCESSUS CRITIQUES DE SECURITE

(30) Priorität: 20.08.1999 DE 19939567
(43) Veröffentlichungstag der Anmeldung: 10.07.2002
(73) Patentinhaber: PILZ GmbH & CO., 73760 Ostfildern (DE)
(72) Erfinder: RUPP, Roland, D-73110 Hattenhofen (DE); WOHNHAAS, Klaus, D-70736 Fellbach (DE); SCHWENKEL, Hans, D-70192 Stuttgart (DE)
(74) Vertreter: Duhme, Torsten
(86) Internationale Anmeldenummer: EP0006483
(87) Internationale Veröffentlichungsnummer: WO01014940

(56) Entgegenhaltungen:
- EP-A- 0 698 837
- DE-A- 4 225 834
- DE-A- 19 529 430
- DE-A- 19 742 716
- J.N. CALLEN ET AL.: "A Distributed Control system for Vehicles" AUVSI PROCEEDINGS '96, 15. Juli 1996 (1996-07-15), Seiten 619-636, XP000974450 Orlando, Florida, USA
- M. FARSI ET AL.: "AN INTRODUCTION TO CANOPEN AND CANOPEN COMMUNICATION ISSUES" IEE CANOPEN IMPLEMENTATION WORKSHOP, 6. Oktober 1997 (1997-10-06), Seiten 2/1-6, XP000972764 London, UK

## Beschreibung

Die vorliegende Erfindung betrifft eine Vorrichtung zum Steuern von sicherheitskritischen Prozessen, mit einer sicheren Steuerungseinheit zum Steuern der sicherheitskritischen Prozesse und mit zumindest zwei sicheren Signaleinheiten, die über E/A-Kanäle mit den sicherheitskritischen Prozessen verbunden sind, wobei die sichere Steuerungseinheit und die sicheren Signaleinheiten an einen gemeinsamen Feldbus angeschlossen sind und wobei die sicheren Signaleinheiten im Steuerungsbetrieb der Vorrichtung mit der sicheren Steuerungseinheit, nicht jedoch miteinander kommunizieren, wobei die sicheren Signaleinheiten Auswertemittel zum Auswerten eines allgemein über den Feldbus übertragenen Fehlertelegramms aufweisen, sowie Schaltmittel, die den sicherheitskritischen Prozeß bei einem als relevant ausgewerteten allgemeinen Fehlertelegramm eigenständig in einen sicheren Zustand überführen.

Eine derartige Vorrichtung ist aus der DE 42 25 834 A1 bekannt.

Bei einem Feldbus handelt es sich um ein System zur Datenkommunikation, bei dem die angeschlossenen Einheiten über eine Sammelleitung miteinander verbunden sind. Daher können zwei an den Feldbus angeschlossene Einheiten miteinander kommunizieren, ohne individuell direkt miteinander verkabelt zu sein. Beispiele für bekannte Feldbusse sind der sogenannte CAN-Bus, der sogenannte Profibus und der sogenannte Interbus.

Im Bereich der Steuer- und Automatisierungstechnik ist die Verwendung von Feldbussen bereits seit längerem hinreichend bekannt. Dies gilt jedoch nicht für die Steuerung von sicherheitskritischen Prozessen, bei denen in der Praxis bis in die jüngste Vergangenheit hinein die an der Steuerung beteiligten Einheiten individuell miteinander verkabelt wurden. Grund hierfür ist, daß die bekannten Feldbusse die zur Steuerung von sicherheitskritischen Prozessen erforderliche Fehlersicherheit (Fehlerwahrscheinlichkeit kleiner als 10⁻¹¹) nicht gewährleisten konnten. Zwar besitzen alle bekannten Feldbusse Maßnahmen zur Fehlersicherung bei der Datenübertragung, diese Maßnahmen sind jedoch nicht ausreichend, um die geforderte Fehlersicherheit zu gewährleisten. Hinzu kommt, daß Feldbusse offene System sind, an die grundsätzlich beliebige Einheiten angeschlossen werden können. Dabei besteht die Gefahr, daß eine Einheit, die mit einem zu steuernden sicherheitskritischen Prozeß gar nichts zu tun hat, diesen ungewollt beeinflußt.

Unter einem sicherheitskritischen Prozeß wird hier ein Prozeß verstanden, von dem bei Auftreten eines Fehlers eine nicht akzeptable Gefahr für Menschen oder materielle Güter ausgeht. Bei einem sicherheitskritischen Prozeß muß daher mit im Idealfall 100%iger Sicherheit gewährleistet sein, daß der Prozeß bei Auftreten eines Fehlers in einen sicheren Zustand überführt wird. Dies kann bei einer Maschinenanlage beinhalten, daß die Anlage abgeschaltet wird. Bei einem chemischen Produktionsprozeß könnte ein Abschalten jedoch eine unkontrollierte Reaktion hervorrufen, so daß in einem solchen Fall der Prozeß besser in einen unkritischen Parameterbereich gefahren wird.

Sicherheitskritische Prozesse können auch Teilprozesse von größeren, übergeordneten Gesamtprozessen sein. Bei einer hydraulischen Presse kann beispielsweise die Materialzuführung ein nicht-sicherheitskritischer Teilprozeß, das Inbetriebnehmen des Preßwerkzeugs dagegen ein sicherheitskritischer Teilprozeß sein. Weitere Beispiele für sicherheitskritische (Teil-)Prozesse sind die Überwachung von Schutzgittern, Schutztüren oder Lichtschranken, die Steuerung von Zwei-Hand-Schaltern oder die Überwachung und Auswertung eines Not-Aus-Schalters.

Die an der Steuerung eines sicherheitskritischen Prozesses beteiligten Einheiten müssen über ihre eigentliche Funktion hinausgehende, sicherheitsbezogene Einrichtungen aufweisen. Diese dienen vor allem der Fehler- und Funktionsüberwachung. In der Regel sind derartige Einheiten redundant aufgebaut, um eine sichere Funktion auch bei Auftreten eines Fehlers zu gewährleisten. Einheiten mit derartigen sicherheitsbezogenen Maßnahmen werden nachfolgend im Unterschied zu "normalen" Einheiten als sicher bezeichnet.

Als Steuerungseinheit im Sinne der vorliegenden Erfindung werden Einheiten bezeichnet, die eine gewisse Intelligenz zur Steuerung eines Prozesses besitzen. In der Fachterminologie werden solche Steuerungseinheiten häufig als Client bezeichnet.

Sie erhalten Daten und/oder Signale, die Zustandsgrößen der gesteuerten Prozesse repräsentieren und aktivieren in Abhängigkeit von diesen Informationen Aktoren, die den zu steuernden Prozeß beeinflussen. Üblicherweise ist die Intelligenz in Form eines veränderbaren Anwenderprogramms in einem Speicher der Steuerungseinheiten niedergelegt. In der Regel werden als Steuerungseinheiten sogenannte SPS (Speicher Programmierbare Steuerungen) verwendet.

Eine Signaleinheit ist demgegenüber ein Baustein, der im wesentlichen Ein- und Ausgangskanäle (E/A-Kanäle) bereitstellt, an die einerseits Sensoren zur Aufnahme von Prozeßgrößen und andererseits Aktoren angeschlossen werden können. Eine Signaleinheit besitzt keine Intelligenz in Form eines veränderbaren Anwenderprogramms und sie besitzt daher auch nicht die Fähigkeit, eine Maschine oder einen Prozeß eigenständig zu steuern. Allenfalls kann beim Auftreten eines Fehlers eine Notabschaltung eigenständig ausgeführt werden. Eine Signaleinheit ist an sich nur dazu vorgesehen, einen von einer räumlich entfernten Steuerungseinheit empfangenen Befehl vor Ort auszuführen. Hierzu kann die Signaleinheit ein Programm in Form eines Betriebssystems besitzen. Dieses ist jedoch vom Anwender nicht ohne Eingriff in die Hardware der Signaleinheit veränderbar. Signaleinheiten werden in der Fachterminologie üblicherweise als Server bezeichnet.

In der DE 197 42 716 A1 ist eine Vorrichtung zum Steuern von sicherheitskritischen Prozessen, wie beispielsweise die Überwachung eines Schutzgitters, beschrieben. Die bekannte Vorrichtung besitzt eine Steuerungseinheit sowie beispielhaft drei Signaleinheiten, die über einen Feldbus miteinander verbunden sind. Sowohl die Steuerungseinheit als auch die Signaleinheiten weisen sicherheitsbezogene Einrichtungen zum Ausführen von vorbestimmten Sicherheitsfunktionen auf. Es handelt sich daher ganz allgemein um sichere Einheiten im Sinne der vorliegenden Erfindung.

Bei der bekannten Vorrichtung wird beim Auftreten eines Fehlers der zu steuernde Prozeß in einen sicheren Zustand überführt. Das Schaltsignal, mit dem diese Aktion eingeleitet wird, kann einerseits von der übergeordneten Steuerungseinheit und andererseits im Bereich derjenigen Signaleinheit ausgelöst werden, bei der der Fehler auftritt.

Bei der bekannten Vorrichtung ist es jedoch nicht möglich, daß eine erste Signaleinheit, in deren Bereich ein Fehler auftritt, andere an den Feldbus angeschlossene Signaleinheiten dazu veranlaßt, die dort verbundenen Prozesse ebenfalls abzuschalten bzw. in einen sicheren Zustand zu überführen. Wenn mehrere Prozesse, die über verschiedene Signaleinheiten angesteuert werden, in einen sicheren Zustand überführt werden müssen, ist es erforderlich, daß die Steuerungseinheit jeder der betroffenen Signaleinheiten einen entsprechenden individuellen Steuerungsbefehl übermittelt. Der Grund hierfür liegt darin, daß die bekannten Signaleinheiten keine Intelligenz besitzen, aufgrund der sie in der Lage wären, andere Signaleinheiten zu steuern.

Die bekannte Vorrichtung besitzt daher den Nachteil, daß beim Auftreten eines Fehlers im Bereich einer Signaleinheit wertvolle Zeit vergehen kann, bevor sicherheitskritische Prozesse, die mit anderen Signaleinheiten verbunden sind, in einen sicheren Zustand überführt werden können. Im einzelnen ist hier zunächst ein Datenaustausch zwischen der ersten Signaleinheit und der übergeordneten Steuerungseinheit und anschließend ein weiterer Datenaustausch zwischen der übergeordneten Steuerungseinheit und den weiteren betroffenen Signaleinheiten erforderlich. Bei der bekannten Vorrichtung besteht daher die Gefahr, daß die Abschaltung eines Prozesses, der von einem Fehler nur mittelbar betroffenen ist, nicht schnell genug erfolgt.

Aus der bereits eingangs erwähnten DE 42 25 834 A1 ist eine Vorrichtung bekannt, die zwei sichere Steuerungseinheiten sowie mehrere sichere Signaleinheiten beinhaltet, die über einen Feldbus miteinander verbunden sind. Die Signaleinheiten besitzen Eingangs- und Ausgangskanäle, über die industrielle Prozeßparameter eingelesen bzw. ausgegeben werden können. Um bei sicherheitskritischen Prozessen gefährliche Situationen zu vermeiden, besitzen sowohl die Steuerungseinheit als auch die Signaleinheiten zusätzliche sicherheitsbezogene Einrichtungen. Diese werden dort als Fehleranalyseeinrichtungen bezeichnet. Die Fehleranalyseeinrichtungen starten ein Notprogramm, durch das die Anlage oder Teile davon in eine sichere Ruhelage gebracht werden, sobald ein Defekt im Gesamtsystem erkannt wird. Wird ein Defekt im Bereich einer Signaleinheit erkannt, läuft das Notprogramm nur begrenzt im Bereich dieser Signaleinheit ab. Tritt hingegen ein sogenannter Masterdefekt oder ein Defekt im Bussystem auf, wird dies von allen Fehleranalyseeinrichtungen in allen Untereinheiten registriert, und es wird die Gesamtheit aller Notlaufprogramme gestartet. Außerdem kann die zentrale Steuereinheit ein Fehlersignal an die Untereinheiten zum Starten der Notlaufprogramme abgeben. Eine vollständige Abschaltung der Maschine findet statt, wenn die übergeordnete Steuerungseinheit sämtliche betroffenen Signaleinheiten entsprechend ansteuert.

Aus der DE 195 29 430 A1 ist ferner ein Sicherheitsmodul für eine Bogendruckmaschine bekannt. Das Sicherheitsmodul kann in dezentral verteilten Untereinheiten implementiert sein, die über ein Bussystem verbunden sind. Das gesamte Sicherheitsmodul kann in mehrere Überwachungs- und Reaktionsbereiche untergliedert sein. Eine bereichsweise Abschaltung der Maschine erfolgt jedoch stets nur unter Kontrolle der zentralen Signalverarbeitungseinheit. Eine Kommunikation zwischen verschiedenen Signaleinheiten findet nicht statt.

Vor diesem Hintergrund ist es eine Aufgabe der vorliegenden Erfindung, eine Vorrichtung der eingangs genannten Art derart weiterzubilden, daß betroffene Maschinenbereiche einerseits flexibel und andererseits sehr schnell abgeschaltet werden können.

Diese Aufgabe wird bei der eingangs genannten Vorrichtung dadurch gelöst, daß jede der Signaleinheiten Sendemittel zum Versenden eines allgemeinen Fehlertelegramms an eine Vielzahl von Signaleinheiten aufweist, und daß die an den Feldbus angeschlossenen Signaleinheiten jeweils zumindest einer definierten Gruppe von Signaleinheiten zugeordnet sind, wobei die Auswertemittel jeder Signaleinheit das allgemeine Fehlertelegramm auf seine Relevanz für die jeweils zugeordnete Gruppe hin auswerten.

Die Signaleinheiten der vorliegenden Erfindung besitzen somit die Fähigkeit, eigenständig auf ein Fehlertelegramm zu reagieren, das allgemein über den Feldbus übertragen wird, das also nicht individuell an sie gerichtet ist.

Eine eigenständige Reaktion der Signaleinheiten bedeutet, daß diese auch ohne einen individuell an sie gerichteten Steuerbefehl von der übergeordneten Steuerungseinheit reagieren können. Anschaulich gesprochen besitzen die Signaleinheiten der vorliegenden Erfindung daher eine gewisse Intelligenz, die innerhalb ihres Betriebssystems und/oder ihrer Hardware abgelegt ist.

Die erfindungsgemäße Vorrichtung besitzt den Vorteil, daß die einzelnen Signaleinheiten aufgrund ihrer gewonnenen Intelligenz in der Lage sind, ein allgemein übertragenes Fehlertelegramm eigenständig auszuwerten. Dadurch können sie unabhängig von der übergeordneten Steuerungseinheit auf einen Fehler reagieren, der in einem anderen Bereich der Gesamtvorrichtung aufgetreten ist. Es ist demnach nicht mehr erforderlich, daß jede einzelne Signaleinheit einen individuellen Steuerbefehl zum Abschalten der mit ihr verbundenen sicherheitskritischen Prozesse erhält. Aufgrund dieser Maßnahme ist es möglich, beim Auftreten eines Fehlers mit einem einzigen Fehlertelegramm beliebige Kombinationen von Teilprozessen gleichzeitig abzuschalten. Dies ist wesentlich schneller, als wenn jede der betroffenen Signaleinheiten individuell von der übergeordneten Steuerungseinheit angesprochen werden muß.

Ferner weist jede der Signaleinheiten Sendemittel zum Versenden eines Fehlertelegramms an eine Vielzahl von Signaleinheiten auf.

Diese Maßnahme besitzt den Vorteil, daß jede der Signaleinheiten in der Lage ist, beim Auftreten eines Fehlers in ihrem Bereich die übrigen am Feldbus angeschlossenen Signaleinheiten direkt zu informieren. Da jede der Signaleinheiten darüber hinaus in der Lage ist, auf den Empfang eines Fehlertelegramms hin eigenständig zu reagieren, können auf diese Weise sicherheitskritischen Teilprozesse, die von dem Fehler betroffen sind, besonders schnell in einen sicheren Zustand überführt werden. Der besondere Vorteil dieser Maßnahme besteht darin, daß die übergeordnete Steuerungseinheit hier gar nicht mehr an der Kommunikation der Signaleinheiten beteiligt ist, d.h. die Signaleinheiten kommunizieren direkt miteinander ohne den Umweg über die Steuerungseinheit. Hierdurch wird ein beträchtlicher Zeitgewinn erreicht.

Außerdem sind die an den Feldbus angeschlossenen Signaleinheiten jeweils zumindest einer definierten Gruppe von Signaleinheiten zugeordnet, wobei die Auswertemittel jeder Signaleinheit das Fehlertelegramm auf seine Relevanz für die jeweils zugeordnete Gruppe hin auswerten.

Diese Maßnahme besitzt den Vorteil, daß die einzelnen Signaleinheiten sehr schnell feststellen können, ob ein Fehler, der im Bereich einer anderen Signaleinheit aufgetreten ist, eine Relevanz im Hinblick auf die eigenen sicherheitskritischen Prozesse besitzt. Infolgedessen kann jede der betroffenen Signaleinheiten besonders schnell auf ein allgemein versendetes Fehlertelegramm reagieren.

Die genannte Aufgabe ist daher vollständig gelöst.

In einer Ausgestaltung der zuvor genannten Maßnahme sind in jedem Fehlertelegramm die vom Fehler betroffenen Gruppen codiert.

Diese Maßnahme besitzt den Vorteil, daß jede der Signaleinheiten die Relevanz des Fehlertelegramms unmittelbar aus dem Fehlertelegramm selbst erkennen kann. Hierdurch ist eine nochmals beschleunigte Reaktion auf das Auftreten eines relevanten Fehlers möglich.

In einer weiteren Ausgestaltung der Erfindung besitzen Fehlertelegramme innerhalb des Busprotokolls unabhängig von der Priorität ihres Absenders die höchste Übertragungspriorität.

In dieser Ausgestaltung der Erfindung ist es einer Signaleinheit unabhängig von der Buslast möglich, ein Fehlertelegramm unmittelbar nach dem Erkennen des Fehlers zu versenden. Dies gilt auch, wenn die Signaleinheit innerhalb der Struktur des Feldbusses nur eine untergeordnete Sendepriorität besitzt. Anschaulich gesprochen, erhält hier jeder am Feldbus angeschlossene Teilnehmer die Möglichkeit, ein Telegramm allerhöchster Priorität zu versenden. Hierdurch ist es möglich, andere an den Feldbus angeschlossene Einheiten besonders schnell über das Auftreten eines Fehlers auch in einem untergeordneten Bereich der Anlage zu informieren. Infolgedessen ist es möglich, auch auf scheinbar "kleine" Fehler sehr schnell zu reagieren. Darüber hinaus erhält jede Einheit hierdurch die Möglichkeit, einen Buszugriff auch bei höchster Buslast und unabhängig von ihrer Priorität zu erzwingen.

In einer weiteren Ausgestaltung der Erfindung werten die Auswertemittel jeder Signaleinheit ein Fehlertelegramm ohne Versenden eines Quittungstelegramms aus.

Diese Maßnahme stellt im Hinblick auf bekannte Vorrichtungen eine Besonderheit dar, da bei der Steuerung von sicherheitskritischen Prozessen üblicherweise jedes versendete Telegramm zunächst über ein Quittungstelegramm, das von der Empfangseinheit zur Sendeeinheit zurückgeschickt wird, bestätigt wird. Die Sendeeinheit reagiert auf das Ausbleiben eines Quittungstelegramms üblicherweise, indem sie die Datenverarbeitung der Empfangseinheit durch geeignete Maßnahmen unterbricht. Die genannte Maßnahme besitzt demgegenüber den Vorteil, daß eine Signaleinheit ein erhaltenes Fehlertelegramm ohne Zeitverzögerung direkt verarbeiten kann, da in diesem Fall ausnahmsweise kein Quittungstelegramm erforderlich ist. Aufgrund dieser Maßnahme kann die Reaktion auf das Auftreten eines Fehlers nochmals beschleunigt werden.

In einer weiteren Ausgestaltung der Erfindung weist jede Signaleinheit eine Zeitüberwachung auf, die beim Ausbleiben eines erwarteten Ereignisses die Versendung eines Fehlertelegramms auslöst.

Die Maßnahme besitzt den Vorteil, daß hierdurch eine große Redundanz innerhalb der gesamten Vorrichtung erreicht wird, da jede an den Feldbus angeschlossene Signaleinheit die Einhaltung vorgegebener Zeitabläufe überwacht. Die genannte Maßnahme trägt daher zur Erhöhung der Sicherheit innerhalb der gesamten Vorrichtung bei, da die gegenseitige Kontrolle "auf zahlreiche Schultern" verteilt wird.

In einer weiteren Ausgestaltung der zuvor genannten Maßnahme ist das erwartete Ereignis der Empfang eines Quittungstelegramms.

Diese Maßnahme besitzt den Vorteil, daß jede der an den Feldbus angeschlossenen Einheiten beim Versenden eines Telegramms automatisch eine Fehlerüberprüfung der angesprochenen Einheiten durchführt. Hierdurch wird eine stetige und praktisch lückenlose gegenseitige Kontrolle erreicht.

In einer weiteren Ausgestaltung der zuvor genannten Maßnahmen ist das erwartete Ereignis der Empfang eines zyklisch versendeten Prüftelegramms.

Bei dem Prüftelegramm handelt es sich um eine Nachricht, die von einer Einheit, beispielsweise einer übergeordneten Steuereinheit, an andere an den Feldbus angeschlossene Einheiten versendet wird. Da ein solches Telegramm, wie bereits erläutert, durch ein Quittungstelegramm bestätigt werden muß, erhält die übergeordnete Einheit die Möglichkeit, die Verbindung zu der angesprochenen Einheiten auf ihre Fehlerfreiheit hin zu überprüfen. Dadurch, daß jede Signaleinheit den regelmäßigen, zyklischen Eingang der Prüftelegramme überwacht, wird umgekehrt auch eine Kontrolle der übergeordneten Einheit erreicht.

In einer weiteren Ausgestaltung der zuvor genannten Maßnahmen, die jedoch für sich genommen ebenfalls als Erfindung anzusehen ist, ist das erwartete Ereignis eine Sendemöglichkeit.

Wie bereits erwähnt, wird die Kommunikation der einzelnen angeschlossenen Einheiten in vielen Feldbus-Systemen durch die individuelle Vergabe einer Sendeberechtigung bzw. durch die Einräumung von individuellen Sendemöglichkeiten koordiniert (z.B. beim Profibus). In anderen Feldbus-Systemen erhalten die einzelnen Einheiten ihre Sendeberechtigung aufgrund einer ihnen fest zugeordneten Priorität. In beiden Fällen kann es vorkommen, daß eine Einheit aufgrund einer hohen Buslast unzulässig lange auf die Sendemöglichkeit warten muß. Dies kann bei der Steuerung von sicherheitskritischen Prozessen gefährlich sein, da diese Einheit für eine entsprechend lange Zeit von der Kommunikation abgeschnitten ist. Aufgrund der genannten Maßnahme ist es jedoch möglich, daß die betroffene Einheit sich auch gegenüber Busteilnehmern durchsetzt, die eine höhere Priorität besitzen, indem sie nämlich ein Fehlertelegramm mit entsprechend hoher bzw. höchster Priorität generiert. Die Maßnahme besitzt den Vorteil, daß der Feldbus auch bei der Steuerung von sicherheitskritischen Prozessen mit einer sehr hohen Buslast betrieben werden kann, da es hier jeder Einheit stets möglich ist, eine unzulässig lange Blockierung zu überwinden. Hierdurch ist auch bei einer sehr hohen Buslast gewährleistet, daß Nachrichten stets innerhalb einer fest definierten, maximalen Zeitspanne über den Feldbus übertragen werden. Die Maßnahme ist aufgrund dieser Tatsache auch für sich genommen von besonderem Vorteil.

In einer weiteren Ausgestaltung der Erfindung ist der Feldbus ein CAN-Bus.

Diese Maßnahme ist besonders vorteilhaft, da ein CAN-Bus von seiner Grundstruktur her das Versenden und Empfangen von Nachrichten zwischen beliebigen an den Bus angeschlossenen Einheiten ermöglicht. Hierdurch ist ein CAN-Bus besonders gut geeignet, um beim Auftreten eines Fehlers in einem bestimmten Bereich sehr schnell ein Fehlertelegramm an eine Vielzahl von angeschlossenen Einheiten zu versenden. Gleichzeitig erfordert ein CAN-Bus aufgrund dieser Eigenschaft jedoch bei der Steuerung von sicherheitskritischen Prozessen die Einhaltung sehr streng definierter Regeln zur Koordination der Kommunikation. Die erfindungsgemäßen Maßnahmen sind in Verbindung mit einem CAN-Bus besonders vorteilhaft, da sie einerseits klare Regeln zur Koordination der Kommunikation beinhalten und andererseits die Besonderheit des CAN-Busses optimal ausnutzen. Insgesamt ist ein CAN-Bus daher in Kombination mit den erfindungsgemäßen Maßnahmen besonders gut zur Steuerung von sicherheitskritischen Prozessen geeignet.

In einer weiteren Ausgestaltung, die jedoch auch für sich genommen vorteilhaft ist, weist die Vorrichtung zumindest zwei sichere Steuerungseinheiten zum Steuern von sicherheitskritischen Prozessen auf, die über einen gemeinsamen Feldbus mit zumindest einer Signaleinheit verbunden sind.

Diese Maßnahme besitzt den Vorteil, daß die Vorrichtung auch dann noch zum Steuern von Prozessen verwendet werden kann, wenn eine der Steuerungseinheiten ausfällt. Beispielsweise ist es hierdurch möglich, zwei gleiche Maschinenanlagen getrennt voneinander über einen gemeinsamen Feldbus zu steuern. Wenn eine der Maschinenanlagen ausfällt, kann die andere weiter arbeiten und unter Umständen sogar die Produktion erhöhen, um den Verlust aus der ersten Maschinenanlage auszugleichen.

In einer weiteren Ausgestaltung der zuvor genannten Maßnahme weist die Vorrichtung ferner eine Verwaltungseinheit zum Koordinieren der zumindest zwei sicheren Steuerungseinheiten auf.

Diese Maßnahme besitzt den Vorteil, daß die Koordination der mehrfachen Steuerungseinheiten von diesen getrennt erfolgen kann, so daß die Steuerungseinheiten selbst vollständig zum Steuern der Prozesse, d.h. zum Ausführen der Anwendungsprogramme zur Verfügung stehen. Darüber hinaus ist die Koordination der Steuerungseinheiten, die wiederum Sicherheitsaspekte der Vorrichtung berücksichtigen muß, dem Zugriff des Anwenders entzogen.

In einer weiteren Ausgestaltung ist den zumindest zwei sicheren Steuerungseinheiten zumindest eine Signaleinheit gemeinsam zugeordnet, wobei eine erste der sicheren Steuerungseinheiten direkt mit der genannten Signaleinheit kommuniziert, während eine zweite der sicheren Steuerungseinheiten über die erste Steuerungseinheit mit der genannten Signaleinheit kommuniziert.

Diese Maßnahme besitzt den Vorteil, daß einzelne Ressourcen innerhalb der Vorrichtung, beispielsweise ein Not-Aus-Schalter, von den mehreren Steuerungseinheiten gemeinsam genutzt werden können. Hierdurch lassen sich Kosten einsparen und es wird insgesamt die Flexibilität erhöht. Dabei ist aufgrund der genannten Maßnahme die Vermeidung von Kollisionen beim Zugriff auf die gemeinsam genutzte Signaleinheit möglich.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel der Erfindung, bei dem zwei sichere Steuerungseinheiten über einen Feldbus mit insgesamt vier sicheren Signaleinheiten verbunden sind,
- Fig. 2: unterschiedlichen Datenverkehr über den Feldbus und
- Fig. 3: eine schematische Darstellung verschiedener Kommunikationsabläufe zwischen einer sicheren Steuerungseinheit und zwei sicheren Signaleinheiten.

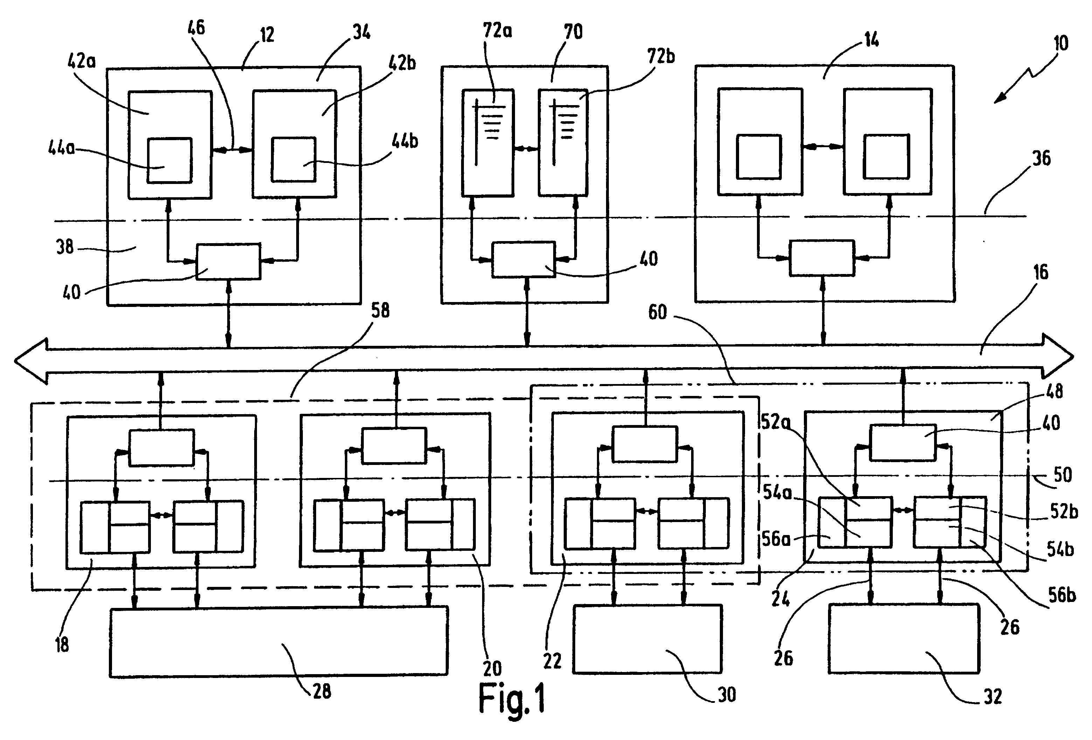

In Fig. 1 ist eine erfindungsgemäße Vorrichtung in ihrer Gesamtheit mit der Bezugsziffer 10 bezeichnet.

Die Vorrichtung 10 besitzt zwei sichere Steuerungseinheiten 12 und 14, die über einen Feldbus 16 mit insgesamt vier sicheren Signaleinheiten 18, 20, 22 und 24 verbunden sind. Jede der sicheren Signaleinheiten 18 bis 24 weist mehrere E/A-Kanäle auf, über die sie mit jeweils einem sicherheitskritischen Prozeß 28, 30, 32 verbunden ist. Dabei sind die sicheren Signaleinheiten 18 und 20 mit dem Prozeß 28 verbunden, während die Signaleinheit 22 mit dem Prozeß 30 und die Signaleinheit 24 mit dem Prozeß 32 verbunden ist. Bei dem sicherheitskritischen Prozeß 28 handelt es sich beispielsweise um die Zwei-Hand-Steuerung einer Maschinenanlage, bei der außerdem auch die Drehzahl einer Maschinenwelle (hier nicht dargestellt) überwacht wird. Der sicherheitskritische Prozeß 30 ist beispielsweise die Überwachung eines Not-Aus-Schalters und der sicherheitskritische Prozeß 32 die Überwachung eines Schutzgitters (ebenfalls nicht dargestellt).

Die Signaleinheiten 18 bis 24 lesen über ihre E/A-Kanäle 26 einerseits Signale und/oder Datenwerte der sicherheitskritischen Prozesse 28 bis 32 ein. Derartige Signale bzw. Datenwerte sind beispielsweise die aktuelle Drehzahl der Maschinenwelle oder die Schalterstellung des Not-Aus-Schalters. Andererseits können die Signaleinheiten 18 bis 24 über die E/A-Kanäle 26 auf Aktoren einwirken, mit denen die sicherheitskritischen Prozesse 28 bis 32 beeinflußt werden. So gehört beispielsweise zu dem sicherheitskritischen Prozeß 30, in dem die Schalterstellung des Not-Aus-Schalters überwacht wird, ein Aktor (nicht dargestellt), mit dem die Hauptstromversorgung der gesteuerten und überwachten Maschinenanlage abgeschaltet werden kann.

Die sicheren Steuerungseinheiten 12 und 14 sind ebenso wie die sicheren Signaleinheiten 18 bis 24 vom Grundsatz her jeweils gleich aufgebaut. Aus diesem Grund sind die nachfolgenden Bezugszeichen zur Erläuterung der Steuerungseinheiten 12, 14 bzw. der Signaleinheiten 18 bis 24 in Fig. 1 jeweils nur einmal aufgeführt.

Die Steuerungseinheiten 12, 14 beinhalten jeweils einen sicheren Verarbeitungsteil 34, der in Fig. 1 oberhalb der strichpunktierten Linie 36 angeordnet ist. Unterhalb der Linie 36 befindet sich in dieser schematischen Darstellung ein nichtsicherer Teil 38, der im wesentlichen einen als Buscontroller bezeichneten Baustein 40 enthält. Der Buscontroller 40 ist ein Standard-Baustein, in dem das Standard-Protokoll des Feldbusses 16 implementiert ist. Der Buscontroller 40 ist in der Lage, das eigentliche Versenden und Empfangen von Nachrichten in Form von Telegrammen eigenständig abzuwickeln. Die zu versendenden Nachrichten erhält er von dem sicheren Verarbeitungsteil 34. Umgekehrt stellt er empfangene Nachrichten dem sicheren Verarbeitungsteil 34 zur Verfügung.

Gemäß einer bevorzugten Ausführung der Erfindung handelt es sich bei dem Feldbus 16 um einen CAN-Bus. Bei diesem Bus werden zu versendende Nachrichten innerhalb eines Nutzdatenfeldes übertragen, das für seinen Weg über den Feldbus 16 mit zusätzlichen Steuerungsinformationen ergänzt wird. Das gesamte Paket aus Steuerungsinformationen und Nutzdatenfeld ist das Telegramm. Der Buscontroller 40 ist in der Lage, Nachrichten, die er von dem sicheren Verarbeitungsteil 34 erhält, selbständig in der vorgeschriebenen Form in die zu versendenden Telegramme einzubetten. Umgekehrt kann er bei einem empfangenen Telegramm die im Nutzdatenfeld enthaltenen Nachrichten extrahieren.

Der sichere Verarbeitungsteil 34 jeder Steuerungseinheit 12, 14 ist zweikanalig aufgebaut. Jeder der beiden Kanäle enthält im wesentlichen einen Prozessor 42a, 42b mit jeweils zugehöriger Peripherie, mit dem ein Anwendungsprogramm 44a, 44b ausgeführt wird. In dem Anwendungsprogramm 44a, 44b ist die Steuerung der Maschinenanlage und damit die Intelligenz der Steuerungseinheiten 12, 14 niedergelegt.

Die beiden Prozessoren 42a, 42b führen sicherheitsrelevante Aufgaben redundant zueinander aus. Dabei kontrollieren sie sich gegenseitig, was in Fig. 1 durch einen Pfeil 46 dargestellt ist. Die sicherheitsrelevanten Aufgaben beinhalten beispielsweise Maßnahmen zur Fehlersicherung von übertragenen bzw. versendeten Nachrichten. Diese Maßnahmen erfolgen zusätzlich und in Ergänzung zu den Fehlersicherungsmaßnahmen, die bereits standardmäßig von dem Buscontroller 40 durchgeführt werden. Hierdurch ist es möglich, die Fehlerwahrscheinlichkeit gegenüber dem nicht-sicheren Feldbus 16 beträchtlich zu erhöhen.

Die Signaleinheiten 18 bis 24 sind über den gleichen Buscontroller 40 an den Feldbus 16 angeschlossen wie die Steuerungseinheiten 12, 14. Dementsprechend ist der Teil 48 oberhalb der Linie 50 in Fig. 1 wiederum nicht-sicher im Sinne der vorliegenden Erfindung. In dem sicheren Verarbeitungsteil unterhalb der Linie 50 ist jede Signaleinheit 18 bis 24 wiederum zweikanalig-redundant aufgebaut. Die beiden redundanten Verarbeitungskanäle sind wiederum in der Lage, eine gegenseitige Fehlerüberwachung durchzuführen.

Jeder der Verarbeitungskanäle der Signaleinheiten 18 bis 24 weist eine Verarbeitungseinheit 52a, 52b sowie ein Schaltmittel 54a, 54b auf. Die Verarbeitungseinheiten 52a, 52b enthalten sowohl Auswertemittel, mit denen die Signaleinheiten 18 bis 24 empfangene Nachrichten auswerten können, als auch Sendemittel, mit denen sie in Kombination mit dem Buscontroller 40 Nachrichten über den Feldbus 16 versenden können. Die Verarbeitungseinheiten 52 beinhalten jeweils einen Prozessor zum Ausführen der vorgesehenen Aufgaben, sie besitzen jedoch kein Anwendungsprogramm 44, das der Anwender der Maschinenanlage ändern kann. Der Funktionsumfang der Signaleinheiten 18 bis 24 ist daher nur vom jeweiligen Hersteller bestimmt und als Betriebssystem in einer sogenannten Firmware niedergelegt.

Die Schaltmittel 54 versetzen die Signaleinheiten 18 bis 24 in die Lage, die hier nicht dargestellten Aktoren zur Beeinflussung der sicherheitskritischen Prozesse 28 bis 32 zu aktivieren. Damit sind die Schaltmittel 54a, 54b in der Lage, die sicherheitskritischen Prozesse 28 bis 32 in einen sicheren Zustand zu überführen. In dem angenommenen Fall, daß die Vorrichtung 10 zum Steuern einer komplexen Maschinenanlage dient, werden die sicherheitskritischen Prozesse 28 bis 32 beispielsweise dadurch in ihren sicheren Zustand überführt, daß Teile der Maschinenanlage bzw. die gesamte Maschinenanlage abgeschaltet werden.

Mit den Bezugsziffern 56a, 56b sind jeweils Zeitüberwachungen bezeichnet, die innerhalb der Signaleinheiten 18 bis 24 überprüfen, ob vorgegebene Zeitabläufe eingehalten werden. Wird eine erwartete Nachricht beispielsweise nicht innerhalb eines definierten Zeitrasters empfangen, generieren die Zeitüberwachungen 56a, 56b eine Fehlermeldung, die letztendlich dazu führen kann, daß die Maschinenanlage abgeschaltet wird.

Gemäß einer bevorzugten Ausführung der Erfindung sind die Signaleinheiten 18 bis 24 definierten Gruppen von Signaleinheiten zugeordnet. Diese Gruppen sind wiederum den beiden Steuerungseinheiten 12 bzw. 14 zugeordnet. Beispielhaft ist in Fig. 1 eine erste Gruppe 58 durch eine gestrichelte Linie angedeutet, der die Signaleinheiten 18, 20 und 22 zugeordnet sind. Mit der Bezugsziffer 60 ist eine zweite Gruppe bezeichnet, der die Signaleinheiten 22 und 24 zugeordnet sind. Hieraus ergibt sich, daß einzelne Signaleinheiten auch mehreren Gruppen 58, 60 gleichzeitig zugeordnet sein können, wie dies anhand der Signaleinheit 22 dargestellt ist.

Die Zuordnung einzelner Signaleinheiten 18 bis 24 zu Gruppen 58, 60 ermöglicht es, beim Auftreten eines Fehlers innerhalb der Vorrichtung 10 die sicherheitskritischen Prozesse 28 bis 32 gruppenweise abzuschalten. Ein Beispiel für die Zuordnung von Signaleinheiten 18 bis 24 zu Gruppen 58, 60 ist, daß mit der Vorrichtung 10, insbesondere den beiden Steuerungseinheiten 12, 14, zwei voneinander getrennte Maschinenanlagen gleichzeitig gesteuert werden. In dem Fall, daß ein auftretender Fehler nur eine der beiden Maschinenanlagen betrifft, genügt es, auch nur diese Maschinenanlage abzuschalten. Durch die gemeinsame Steuerung der beiden Maschinenanlagen mit der Vorrichtung 10 ist es in einem solchen Fall möglich, die Produktionsmenge der zweiten Maschinenanlage zu erhöhen, um den Stillstand der ersten Maschinenanlage auszugleichen. Durch die Zuordnung der Signaleinheiten 18 bis 24 zu den Gruppen 58, 60 können beliebige Kombinationen von sicherheitskritischen Prozessen 28 bis 32 gezielt und mit einem einzigen Steuerbefehl in ihren sicheren Zustand überführt werden.

Mit der Bezugsziffer 70 ist in Fig. 1 eine sogenannte Verwaltungseinheit bezeichnet, die auch als "Management Device" bezeichnet wird. Die Verwaltungseinheit 70 ist ebenfalls über einen Buscontroller 40 an den Feldbus 16 angeschlossen. Sie kann daher mit den übrigen an den Feldbus 16 angeschlossenen Einheiten kommunizieren. An der Kommunikation zwischen den Steuerungseinheiten 12, 14 und den Signaleinheiten 18 bis 24, ist die Verwaltungseinheit jedoch nicht unmittelbar beteiligt.

In ihrem sicheren Verarbeitungsteil besitzt die Verwaltungseinheit 70 im wesentlichen zwei zueinander redundante Speicher 72a, 72b, in denen die gesamte Konfiguration der Vorrichtung 10, insbesondere die Struktur der an den Feldbus 16 angeschlossenen Einheiten abgelegt ist. Die Verwaltungseinheit 70 übernimmt eine zentrale Verwaltungs- und Überwachungsfunktion, um vor allem die verschiedenen Steuerungseinheiten 12, 16 miteinander zu koordinieren. Hierdurch ist es möglich, daß verschiedene Steuerungseinheiten 12, 14 an einem Feldbus 16 betrieben werden können.

Darüber hinaus ist es in dem vorliegenden Ausführungsbeispiel Aufgabe der Verwaltungseinheit 70, in regelmäßigen Zeitintervallen eine Verbindungsprüfung zu initiieren. Hierbei überprüft die Verwaltungseinheit 70 durch Versenden eines Prüftelegramms an die Steuerungseinheiten 12, 14, ob die Verbindung zu diesen Steuerungseinheiten noch fehlerfrei funktioniert. Als Reaktion auf dieses Prüftelegramm versenden die Steuerungseinheiten 12, 14 ihrerseits Prüftelegramme an die ihnen zugeordneten Signaleinheiten 18 bis 24, um auch diese Kommunikationsverbindungen zu überprüfen. Die Verwaltungseinheit 70 überwacht den gesamten diesbezüglichen Datenverkehr und erhält somit in regelmäßigen Zeitintervallen eine Information darüber, ob nach wie vor alle ihr bekannten Einheiten aktiv am Feldbus 16 angeschlossen sind. Beim Ausbleiben eines erwarteten Prüftelegramms oder auch beim Ausbleiben eines erwarteten Antworttelegramms auf ein versendetes Prüftelegramm generiert die Verwaltungseinheit und/oder die betroffene Steuer- oder Signaleinheit ein Fehlertelegramm, aufgrund dessen die sicherheitskritischen Prozesse 28 bis 32 in ihren sicheren Zustand überführt werden.

Alternativ zu dem hier dargestellten Ausführungsbeispiel kann die Verwaltungseinheit 70 auch in einer der Steuerungseinheiten 12, 14 integriert sein. In diesem Fall stellt die Verwaltungseinheit 70 einen Funktionsblock innerhalb der Steuerungseinheit 12, 14 dar, der die betroffene Steuerungseinheit dann von den weiteren am Feldbus 16 angeschlossenen Steuerungseinheiten unterscheidet.

Die Verwendung der Verwaltungseinheit 70 ist besonders vorteilhaft, wenn es sich, wie im vorliegenden Fall, bei dem Feldbus 16 um einen CAN-Bus handelt. Grund hierfür ist, daß in diesem Fall üblicherweise keine zentrale Einheit die Koordination der Kommunikation auf dem Feldbus übernimmt. Im Gegenteil, die an den Feldbus 16 angeschlossenen Einheiten sind zumindest vom Grundsatz her gleichberechtigt. Bei einem Standard-CAN-Bus gibt es daher keine Einheit, die einen Überblick über Veränderungen in der Struktur der am Feldbus 16 angeschlossenen Einheiten besitzt. Der Ausfall einer Einheit, der bei der Steuerung von sicherheitskritischen Prozessen 28 bis 32 unter Umständen einen gefährlichen Zustand hervorrufen kann, wird daher nicht mit hinreichender Sicherheit festgestellt. Durch die Verwendung der Verwaltungseinheit 70 kann diese Sicherheitslücke auch bei einem CAN-Bus geschlossen werden.

In dem hier dargestellten Ausführungsbeispiel wird der Zugriff verschiedener Steuerungseinheiten 12, 14 auf eine gemeinsam genutzte Signaleinheit, hier also beispielhaft die Signaleinheit 22, dadurch koordiniert, daß eine Steuerungseinheit, hier beispielsweise die Steuerungseinheit 12, eine "Master"-Funktion erhält. Diese Funktion gestattet der Steuerungseinheit 12, direkt mit der gemeinsam genutzten Signaleinheit 22 zu kommunizieren. Die anderen "Slave"-Steuerungseinheiten, in diesem Fall also die Steuerungseinheit 14, erhält einen Zugriff auf die gemeinsam genutzte Signaleinheit 22 nur unter Kontrolle der Master-Steuerungseinheit 12. Im vorliegenden Fall versendet die Steuerungseinheit 14 ein Telegramm, das für die gemeinsam genutzte Signaleinheit 22 vorgesehen ist, zunächst an die Master-Steuerungseinheit 12. Diese leitet das Telegramm anschließend an die gemeinsam genutzte Signaleinheit 22 weiter. Die Signaleinheit 24, die im vorliegenden Ausführungsbeispiel allein der Steuerungseinheit 14 zugeordnet ist, wird demgegenüber unmittelbar von der Steuerungseinheit 14 angesprochen. Im Hinblick auf die gemeinsam genutzte Signaleinheit 22 erscheint die Steuerungseinheit 14 innerhalb der Struktur des Feldbusses 16 der Steuerungseinheit 12 untergeordnet. Sie wird von der Steuerungseinheit 12 in gleicher Weise angesprochen, wie die Signaleinheiten 18 bis 24. Im Hinblick auf die allein von ihr verwendete Signaleinheit 24 besitzt die Steuerungseinheit 14 jedoch selbst die Master-Funktion.

Die Kommunikation zwischen den beiden Steuerungseinheiten 12 und 14 kann ebenso erfolgen, wie die Kommunikation jeder dieser beiden Steuerungseinheiten mit den Signaleinheiten 18 bis 24.

Die Zuordnung der einzelnen Signaleinheiten 18 bis 24 zu den verschiedenen Steuerungseinheiten 12, 14 ist ebenso wie die Zuordnung der Signaleinheiten zu den Gruppen 58, 60 in der Verwaltungseinheit 70 abgelegt.

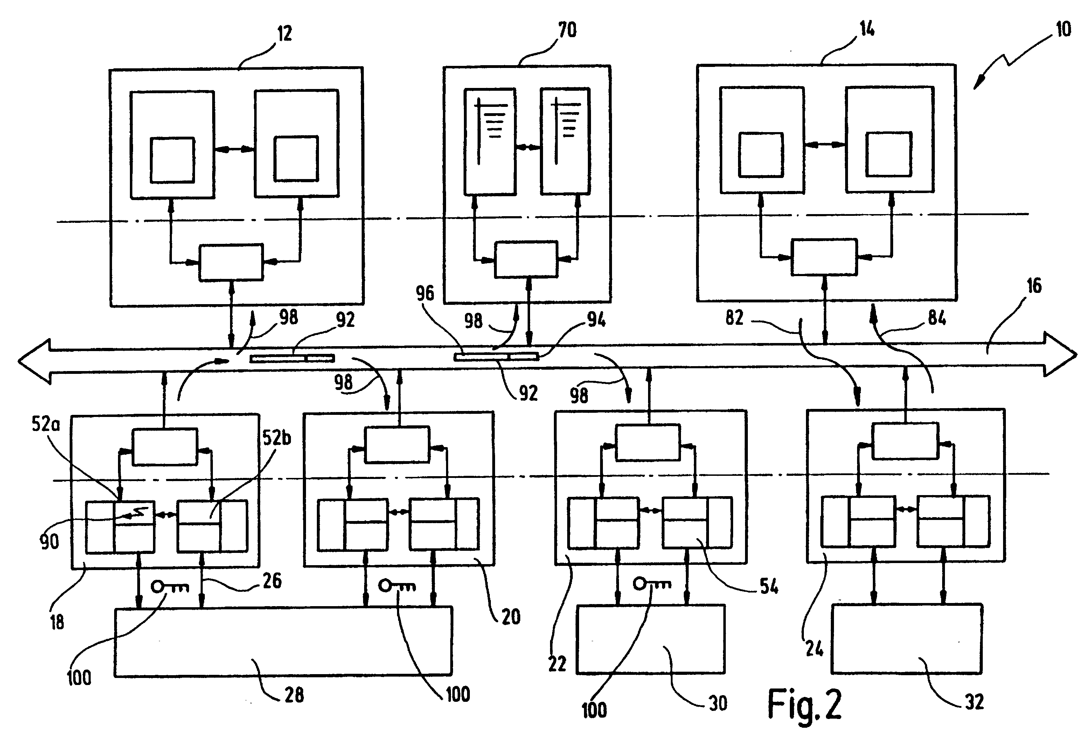

In Fig. 2 ist anhand der Steuerungseinheit 14 und der Signaleinheit 24 zunächst einmal der übliche Datenverkehr über den Feldbus 16 im normalen Steuerungsbetrieb der Vorrichtung 10 dargestellt. Derselbe Datenverkehr findet im normalen Steuerungsbetrieb auch zwischen der Steuerungseinheit 12 und den ihr zugeordneten Signaleinheiten 18 bis 22 statt.

Die Steuerungseinheit 14 versendet einen Steuerbefehl an die Signaleinheit 24 in Form eines Telegramms in Richtung des Pfeils 82. Die Signaleinheit 24 empfängt das Nachrichtentelegramm 82 und antwortet mit einem Quittungstelegramm, das in Richtung des Pfeils 84 zur Steuerungseinheit 14 zurückgesendet wird. Anschließend wertet die Verarbeitungseinheit 52 der Signaleinheit 24 den erhaltenen Steuerbefehl aus und führt die vorgesehene Aktion aus. Die Aktion kann beispielsweise darin bestehen, daß die Signaleinheit 24 einen Signal- oder Datenwert des sicherheitskritischen Prozesses 32 einliest und an die Steuerungseinheit 14 überträgt. Dies erfolgt mit einem Nachrichtentelegramm in Richtung des Pfeils 84, auf das die Steuerungseinheit 14 mit einem Quittungstelegramm in Richtung des Pfeils 82 antwortet.

Die Signaleinheit 24 ist im normalen Steuerungsbetrieb der Vorrichtung 10 ebenso wie die Signaleinheiten 18 bis 22 nur eine ausführende Einheit, von der selbst keine eigenständigen Aktionen ausgehen. Insbesondere kommuniziert keine der Signaleinheiten 18 bis 24 im normalen Steuerungsbetrieb der Vorrichtung 10 mit einer anderen der Signaleinheiten 18 bis 24, da eine solche Kommunikation zwangsläufig eine eigenständige Aktivität voraussetzt.

Abweichend von diesem normalen Steuerungsbetrieb ist jede der Signaleinheiten 18 bis 24 hier jedoch aufgrund der Erfindung in der Lage, ein Fehlertelegramm allgemein über den Feldbus 16 an die anderen Signaleinheiten zu übertragen. Ebenso ist jede der Signaleinheiten 18 bis 24 in der Lage, ein allgemein übertragenes Fehlertelegramm auszuwerten und eigenständig darauf zu reagieren. Dies ist in Fig. 2 am Beispiel der Signaleinheit 18 dargestellt.

In diesem Beispiel ist in der Verarbeitungseinheit 52a der Signaleinheit 18 ein Fehler aufgetreten, der durch einen Blitz 90 angedeutet ist. Die Verarbeitungseinheit 52b stellt diesen Fehler aufgrund der gegenseitigen Kontrolle der Verarbeitungseinheiten 52a, 52b fest. Da dieser Fehler im Hinblick auf den zu steuernden, sicherheitskritischen Prozeß 28 gefährlich sein könnte, generiert die Signaleinheit 18 ein Fehlertelegramm 92 und versendet es allgemein über den Feldbus 16. Das Fehlertelegramm 92 besitzt einen allgemeinen ersten Teil 94, der es als allgemeines Fehlertelegramm kennzeichnet. Ein Telegramm, das diesen allgemeinen Teil aufweist, besitzt automatisch innerhalb der Struktur der Vorrichtung 10 die allerhöchste Priorität und unterbricht gegebenenfalls jeglichen Datenverkehr über den Feldbus 16 zwischen angeschlossenen Einheiten.

Im zweiten Teil 96 des Fehlertelegramms 92 sind die von dem Fehler 90 betroffenen Gruppen 58, 60 von Signaleinheiten 18 bis 24 codiert.

Das Fehlertelegramm 92 wird von allen am Feldbus 16 angeschlossenen Einheiten empfangen und ausgewertet, was durch die Pfeile 98 dargestellt ist. Insbesondere wird das Fehlertelegramm 92 hier von den Signaleinheiten 20, 22 und 24 (letzteres hier nicht dargestellt) empfangen und ausgewertet. Im Gegensatz zum normalen Steuerungsbetrieb der Vorrichtung 10 findet hier daher eine Kommunikation unmittelbar zwischen den Signaleinheiten 18 und 20 bis 24 statt.

Die Verarbeitungseinheiten 52 der einzelnen Signaleinheiten 20 bis 24 sind in der Lage, das Fehlertelegramm 92 als solches zu erkennen und anhand der codierten Gruppen im zweiten Teil 96 auszuwerten. In dem Fall, daß im zweiten Teil 96 des Fehlertelegramms 92 eine Gruppe 58, 60 codiert ist, der eine empfangende Signaleinheit 20 bis 24 angehört, schaltet die entsprechende Verarbeitungseinheit 52 die mit ihr verbundenen sicherheitskritischen Prozesse 28, 30 ab. Dies ist in Fig. 2 anhand der Schlüssel 100 dargestellt. In der in Fig. 2 dargestellten Situation reagieren beispielsweise sämtliche Signaleinheiten, die der ersten Gruppe 58 angehören.

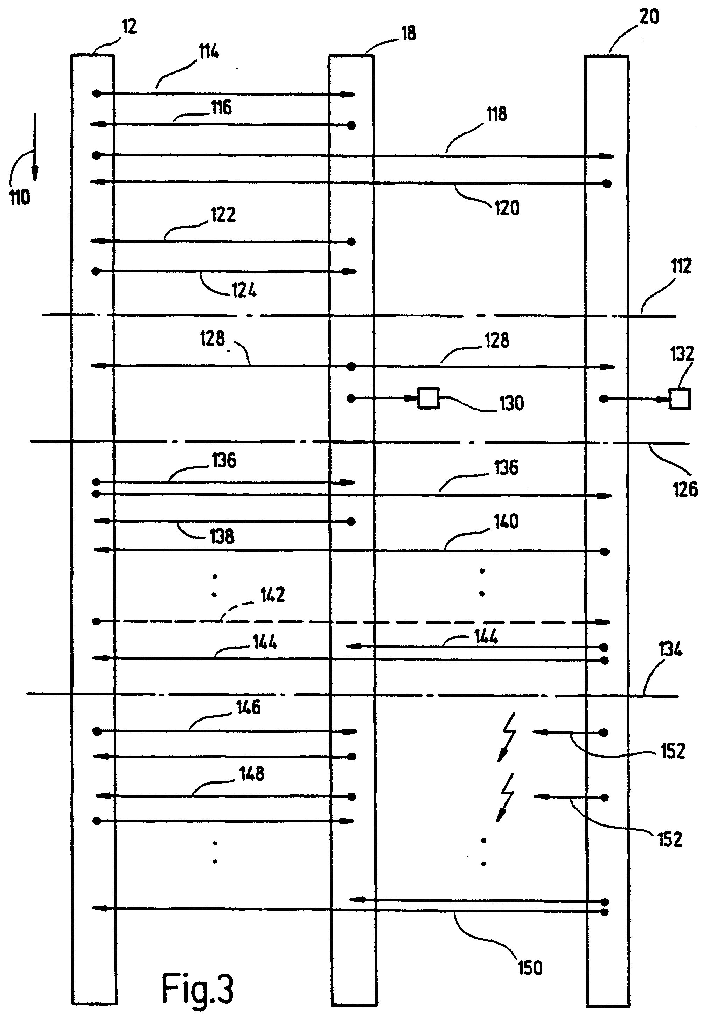

In der schematischen Darstellung in Fig. 3 ist beispielhaft der zeitliche Ablauf der Kommunikation zwischen der Steuerungseinheit 12 und den Signaleinheiten 18 und 20 dargestellt. Dabei verläuft die Zeitachse in Richtung des Pfeils 110.

Die einzelnen Telegramme, die zwischen den verschiedenen Einheiten versendet werden, sind anhand von Pfeilen symbolisiert, deren Ausgangspunkt beim Sender mit einem Punkt gekennzeichnet ist und deren Endpunkt auf den Empfänger verweist.

In dem ersten Zeitabschnitt oberhalb der Linie 112 ist die Kommunikation der betroffenen Einheiten im normalen Steuerungsbetrieb der Vorrichtung 10 dargestellt. Beispielsweise versendet die Steuerungseinheit 12 ein Telegramm 114 mit einem Steuerbefehl an die Signaleinheit 18. Diese antwortet mit einem Quittungstelegramm 116. Im nächsten Schritt versendet die Steuerungseinheit 12 ein Telegramm 118 mit einem weiteren Steuerbefehl an die Signaleinheit 20. Auch diese antwortet mit einem Quittungstelegramm 120. Wenn der erste Steuerbefehl, der mit dem Telegramm 114 an die Signaleinheit 18 übertragen wurde, die Aufforderung zum Einlesen eines Datenwertes enthalten hat, antwortet die Signaleinheit 18 des weiteren mit einem Telegramm 122, mit dem sie der Steuerungseinheit 12 den geforderten Datenwert überträgt. Auch das Telegramm 122 wird mit einem Quittungstelegramm 124 von Seiten der Steuerungseinheit 12 beantwortet. In gleicher Weise kann auch die Signaleinheit 20 Datenwerte an die Steuerungseinheit 12 versenden. Wie anhand dieser Darstellung zu erkennen ist, findet im normalen Steuerungsbetrieb der Vorrichtung 10 keine Kommunikation zwischen den Signaleinheiten 18 und 20 statt.

In dem nächsten Zeitabschnitt zwischen den Linien 112 und 126 ist das Verhalten der Vorrichtung 10 beim Auftreten eines Fehlers innerhalb der Signaleinheit 18 dargestellt. In diesem Fall versendet die Signaleinheit 18 ein Fehlertelegramm 128 allgemein über den Feldbus 16, d.h. jede an den Feldbus 16 angeschlossene Einheit kann dieses Fehlertelegramm 128 empfangen. Insbesondere versendet die Signaleinheit 18 dabei das Fehlertelegramm 128 direkt an die Signaleinheit 20. Anschließend reagieren die betroffenen Signaleinheiten 18, 20 auf den aufgetretenen Fehler, indem sie die Prozesse 130, 132 in ihren sicheren Zustand überführen. Wie anhand dieser Darstellung erkennbar ist, reagieren die betroffenen Signaleinheiten 18, 20 auf das erhaltene Fehlertelegramm 128, ohne den Empfang eines Quittungstelegramms abzuwarten oder den Versand eines Quittungstelegramms zu generieren.

In dem nächsten Zeitabschnitt oberhalb der Linie 134 ist der Ablauf einer Verbindungsprüfung zwischen den Einheiten an dem Feldbus 16 dargestellt. Dabei ist hier angenommen, daß die Verbindungsprüfung von der Steuerungseinheit 12 initiiert wird. Abweichend hiervon wird die Verbindungsprüfung in anderen Ausführungsbeispielen von der Verwaltungseinheit 70 initiiert.

Zu Beginn der Verbindungsprüfung versendet die Steuerungseinheit 12 an die Signaleinheiten 18, 20 ein Prüftelegramm 136, das anschließend von jeder der angesprochenen Signaleinheiten mit einem Quittungstelegramm 138, 140 beantwortet wird. Diese Verbindungsprüfung wird in regelmäßigen, zyklischen Zeitintervallen durchgeführt. Die Zeitintervalle werden mit Hilfe der Zeitüberwachungen 56 von jeder der am Feldbus 16 angeschlossenen Einheiten überwacht. Bleibt ein erwartetes Prüfungstelegramm aus, wie dies anhand des gestrichelten Pfeils 142 dargestellt ist, erzeugt die betroffene Einheit, im vorliegenden Fall die Signaleinheit 20, ein Fehlertelegramm 144, das wiederum allgemein an alle am Feldbus 16 angeschlossenen Einheiten versendet wird. Die am Feldbus 16 angeschlossenen Einheiten reagieren dann in der bereits beschriebenen Art und Weise.

Eine weitere Fehlerquelle ist in dem nächsten Zeitabschnitt unterhalb der Linie 134 dargestellt. In diesem Zeitabschnitt versucht die Signaleinheit 20 ein Telegramm über den Feldbus 16 zu versenden. Dabei kollidiert sie jedoch mit dem gleichzeitig stattfindenden Telegrammverkehr 146, 148 zwischen der Steuerungseinheit 12 und der Signaleinheit 18. Derartige Kollisionen werden beim CAN-Bus ebenso wie bei vielen anderen Bussystemen über die Vergabe von Prioritäten gelöst. Wenn die Signaleinheit 20 für das Versenden ihrer Nachricht eine niedrige Priorität besitzt, ist es jedoch möglich, daß es ihr über einen längeren Zeitraum nicht gelingt, ihre Nachricht über den Feldbus 16 zu versenden.

Wie leicht nachzuvollziehen ist, hängt die Zeitdauer, in der die Signaleinheit 20 in diesem Fall blockiert ist, von der Auslastung des Feldbusses 16 ab. Dabei ist die sogenannte Buslast als Quotient definiert zwischen derjenigen Zeit, in der der Feldbus 16 belegt ist, zu derjenigen Zeit, in der der Feldbus 16 zur freien Verfügung steht. Bei nicht-sicheren Feldbussen wird die Zeit, innerhalb der eine Einheit, wie im vorliegenden Fall die Signaleinheit 20, blockiert sein kann, durch die Angabe einer maximal zulässigen Buslast festgelegt. Wenn beispielsweise die Buslast unterhalb von 50 % liegt, kann man annehmen, daß die angeschlossenen Einheiten im statistischen Mittel ausreichenden Zugriff auf den Feldbus 16 erhalten. Bei der Steuerung eines sicherheitskritischen Prozesses ist eine derartige Definition jedoch nicht ausreichend, da es im Einzelfall abweichend vom statistischen Mittel vorkommen kann, daß die Signaleinheit 20 unzulässig lange blockiert ist.

Gemäß der Erfindung erzeugt die Signaleinheit 20 daher in einem solchen Fall ein Fehlertelegramm 150, das die höchste Priorität besitzt. Hierdurch ist gewährleistet, daß eine unzulässig lange Blockade der Signaleinheit 20 stets nach Ablauf einer definierten Zeitspanne, die von der Zeitüberwachung 56 der Signaleinheit 20 überwacht wird, beendet wird.

Ganz allgemein erhält aufgrund dieser Maßnahme eine Einheit, die an sich mit einer niedrigen Priorität an den Feldbus 16 angeschlossen ist, die Möglichkeit, einen Buszugriff zu erzwingen. Es ist damit möglich, den Feldbus 16 selbst bei der Steuerung von sicherheitskritischen Prozessen mit einer Buslast zu betreiben, die deutlich höher als 50 % liegt.

## Patentansprüche

1. Vorrichtung zum Steuern von sicherheitskritischen Prozessen (28, 30, 32), mit einer sicheren Steuerungseinheit (12, 14) zum Steuern der sicherheitskritischen Prozesse (28, 30, 32) und mit zumindest zwei sicheren Signaleinheiten (18, 20, 22, 24), die über E/A-Kanäle (26) mit den sicherheitskritischen Prozessen (28, 30, 32) verbunden sind, wobei die sichere Steuerungseinheit (12, 14) und die sicheren Signaleinheiten (18, 20, 22, 24) an einen gemeinsamen Feldbus (16) angeschlossen sind und wobei die sicheren Signaleinheiten (18, 20, 22, 24) im Steuerungsbetrieb der Vorrichtung (10) mit der sicheren Steuerungseinheit (12, 14), nicht jedoch miteinander kommunizieren, wobei die sicheren Signaleinheiten (18, 20, 22, 24) Auswertemittel (52a, 52b) zum Auswerten eines allgemein über den Feldbus (16) übertragenen Fehlertelegramms (92; 128; 144; 150) aufweisen, sowie Schaitmittel (54a, 54b), die den sicherheitskritischen Prozeß (28, 30, 32) bei einem als relevant ausgewerteten allgemeinen Fehlertelegramm (92; 128; 144; 150) eigenständig in einen sicheren Zustand überführen, **dadurch gekennzeichnet, daß** jede der Signaleinheiten (18, 20, 22, 24) Sendemittel (40, 52a, 52b) zum Versenden eines allgemeinen Fehlertelegramms (92; 128; 144; 150) an eine Vielzahl von Signaleinheiten (18, 20, 22, 24) aufweist, und daß die an den Feldbus (16) angeschlossenen Signaleinheiten (18, 20, 22, 24) jeweils zumindest einer definierten Gruppe (58, 60) von Signaleinheiten (18, 20, 22, 24) zugeordnet sind, wobei die Auswertemittel (52a, 52b) jeder Signaleinheit (18, 20, 22, 24) das allgemeine Fehlertelegramm (92; 128; 144; 150) auf seine Relevanz für die jeweils zugeordnete Gruppe (58, 60) hin auswerten.

2. Vorrichtung nach Anspruch 1, **dadurch gekennzeichnet, daß** in jedem Fehlertelegramm (92; 128; 144; 150) die vom Fehler betroffenen Gruppen (58, 60) codiert sind.

3. Vorrichtung nach Anspruch 1 oder 2, **dadurch gekennzeichnet, daß** Fehlertelegramme (92; 128; 144; 150) innerhalb des Busprotokolls unabhängig von einer Priorität ihres Absenders die höchste Übertragungspriorität besitzen.

4. Vorrichtung nach einem der Ansprüche 1 bis 3, **dadurch gekennzeichnet, daß** die Auswertemittel (52a, 52b) jeder Signaleinheit (18, 20, 22, 24) ein Fehlertelegramm (92; 128; 144; 150) ohne Versenden eines Quittungstelegramms (116, 120) auswerten.

5. Vorrichtung nach einem der Ansprüche 1 bis 4, **dadurch gekennzeichnet, daß** jede Signaleinheit (18, 20, 22, 24) eine Zeitüberwachung (56) aufweist, die beim Ausbleiben eines erwarteten Ereignisses die Versendung eines Fehlertelegramms (92; 128; 144; 150) auslöst.

6. Vorrichtung nach Anspruch 5, **dadurch gekennzeichnet, daß** das erwartete Ereignis der Empfang eines Quittungstelegramms (116; 120; 124) ist.

7. Vorrichtung nach Anspruch 5 oder 6, **dadurch gekennzeichnet, daß** das erwartete Ereignis der Empfang eines zyklisch versendeten Prüftelegramms (136, 142) ist.

8. Vorrichtung nach einem der Ansprüche 5 bis 7, **dadurch gekennzeichnet, daß** das erwartete Ereignis eine Sendemöglichkeit (152) ist.

9. Vorrichtung nach einem der Ansprüche 1 bis 8, **dadurch gekennzeichnet, daß** der Feldbus (16) ein CAN-Bus ist.

10. Vorrichtung nach einem der Ansprüche 1 bis 9, **dadurch gekennzeichnet, daß** sie zumindest zwei sichere Steuerungseinheiten (12, 14) zum Steuern von sicherheitskritischen Prozessen (28, 30, 32) aufweist, die über einen gemeinsamen Feldbus (16) mit zumindest einer Signaleinheit (18, 20, 22, 24) verbunden sind.

11. Vorrichtung nach Anspruch 10, **dadurch gekennzeichnet, daß** sie ferner eine Verwaltungseinheit (70) zum Koordinieren der zumindest zwei sicheren Steuerungseinheiten (12, 14) aufweist.

12. Vorrichtung nach Anspruch 10 oder 11, **dadurch gekennzeichnet, daß** den zumindest zwei sicheren Steuerungseinheiten (12, 14) zumindest eine Signaleinheit (22) gemeinsam zugeordnet ist, wobei eine erste der sicheren Steuerungseinheiten (12) direkt mit der genannten Signaleinheit (22) kommuniziert, während eine zweite der sicheren Steuerungseinheiten (14) über die erste Steuerungseinheit (12) mit der genannten Signaleinheit (22) kommuniziert.

## Claims

1. Apparatus for controlling safety-critical processes (28, 30, 32), having a safe control unit (12, 14) for controlling the safety-critical processes (28, 30, 32) and having at least two safe signal units (18, 20, 22, 24) which are connected via I/O channels (26) to the safety critical processes (28, 30, 32), with the safe control unit (12, 14) and the safe signal units (18, 20, 22, 24) being connected to a common fieldbus (16), and with the safe signal units (18, 20, 22, 24) communicating with the safe control unit (12, 14), but not with one another, when the apparatus (10) is in the control mode, wherein the safe signal units (18, 20, 22, 24) have evaluation means (52a, 52b) for evaluating a fault message (92; 128; 144; 150) which is transmitted generally via the fieldbus (16), as well as switching means (54a, 54b) which autonomously change the safety-critical process (28, 30, 32) to a safe state when a fault message (92; 128; 144; 150) which is evaluated as being relevant occurs, **characterized in that** each of the signal unit (18, 20, 22, 24) has transmission means (40, 52a, 52b) for sending a general fault message (92; 128; 144; 150) to a large number of signal units (18, 20, 22, 24), and **in that** the signal units (18, 20, 22, 24) which are connected to the fieldbus (16) are each allocated to at least one defined group (58, 60) of signal units (18, 20, 22, 24), with the evaluation means (52a, 52b) of each signal unit (18, 20, 22, 24) evaluating the general fault message (92; 128; 144; 150) for its relevance to the respectively associated group (58, 60).

2. Apparatus according to Claim 1, **characterized in that** those groups (58, 60) which are affected by the fault are coded in each fault message (92; 128; 144; 150).

3. Apparatus according to one of Claims 1 or 2, **characterized in that** fault messages (92; 128; 144; 150) within the bus protocol have the highest transmission priority, irrespective of the priority of their sender.

4. Apparatus according to one of Claims 1 to 3, **characterized in that** the evaluation means (52a, 52b) of each signal unit (18, 20, 22, 24) evaluate a fault message (92;, 128; 144; 150) without sending an acknowledgement message (116, 120).

5. Apparatus according to one of Claims 1 to 4, **characterized in that** each signal unit (18, 20, 22, 24) has a time monitor (56), which initiates the sending of a fault message (92; 128; 144; 150) in the absence of an expected event.

6. Apparatus according to Claim 5, **characterized in that** the expected event is the reception of an acknowledgement message (116; 120; 124).

7. Apparatus according to Claim 5 or 6, **characterized in that** the expected event is the reception of a test message (136, 142), which is sent cyclically.

8. Apparatus according to one of Claims 5 to 7, **characterized in that** the expected event is a transmission window (152).

9. Apparatus according to one of Claims 1 to 8, **characterized in that** the fieldbus (16) is a CAN bus.

10. Apparatus according to one of Claims 1 to 9, **characterized in that** said apparatus has at least two safe control units (12, 14) for controlling safety-critical processes (28, 30, 32), which are connected to at least one signal unit (18, 20, 22, 24) via a common fieldbus (16).

11. Apparatus according to Claim 10, **characterized in that** said apparatus furthermore has an administration unit (70) for co-ordinating the at least two safe control units (12, 14).

12. Apparatus according to Claim 10 or 11, **characterized in that** the at least two safe control units (12, 14) have at least one signal unit (22) associated jointly with them, with a first of the safe control units (12) communicating directly with the said signal unit (22), while a second of the safe control units (14) communicates with the said signal unit (22) via the first control unit (12).

## Revendications

1. Dispositif de commande de processus (28, 30, 32) critiques sur le plan de la sécurité, comportant une unité de commande (12, 14) sûre pour commander les processus (28, 30, 32) critiques sur le plan de la sécurité, et comportant au moins deux unités de signalisation (18, 20, 22, 24) sûres qui sont reliées, par des canaux E/A (26) aux processus (28, 30, 32) critiques sur le plan de la sécurité, l'unité de commande (12, 13) sûre et les unités de signalisation (18, 20, 22, 24) sûres étant raccordées à un bus de champ (16) commun, et les unités de signalisation (18, 20, 22, 24) sûres communiquant, en mode de commande du dispositif (10), avec l'unité de commande (12, 14) sûre, mais pas entre elles, les unités de signalisation (18, 20, 22, 24) sûres comportant des moyens d'exploitation (52a, 52b) pour exploiter un télégramme de défaut (92 ; 128 ; 144 ; 150) transmis de manière générale par le bus de champ (16), ainsi que des moyens de commutation (54a, 54b) qui, dans le cas d'un télégramme de défaut (92 ; 128 ; 144 ; 150) général, interprété comme étant important, font passer, de manière autonome, le processus (28, 30, 32) critique sur le plan de la sécurité, dans un état sûr, **caractérisé en ce que** chacune des unités de signalisation (18, 20, 22, 24) comporte des moyens d'émission (40, 52a, 52b) pour émettre un télégramme de défaut (92 ; 128 ; 144 ; 150) général à un grand nombre d'unités de signalisation (18, 20, 22, 24), et **en ce que** les unités de signalisation (18, 20, 22, 24) raccordées au bus de champ (16), sont associées chacune à au moins un groupe (58, 60) défini d'unités de signalisation (18, 20, 22, 24), les moyens d'exploitation (52a, 52b) de chaque unité de signalisation (18, 20, 22, 24) interprétant l'importance du télégramme de défaut (92 ; 128 ; 144 ; 150) général pour le groupe (58, 60) associé.

2. Dispositif selon la revendication 1, **caractérisé en ce que** dans chaque télégramme de défaut (92 ; 128 ; 144 ; 150) sont codés les groupes (58, 60) concernés par le défaut.

3. Dispositif selon la revendication 1 ou 2, **caractérisé en ce que** des télégrammes de défaut (92 ; 128; 144 ; 150) possèdent, à l'intérieur du protocole de bus, la plus haute priorité de transmission, indépendamment d'une priorité de leur émetteur.

4. Dispositif selon l'une des revendications 1 à 3, **caractérisé en ce que** les moyens d'exploitation (52a, 52b) de chaque unité de signalisation (18, 20, 22, 24) interprètent un télégramme de défaut (92 ; 128 ; 144 ; 150) sans émettre un télégramme d'accusé de réception (116, 120).

5. Dispositif selon l'une des revendications 1 à 4, **caractérisé en ce que** chaque unité de signalisation (18, 20, 22, 24) comporte une surveillance du temps (56) qui déclenche l'émission d'un télégramme de défaut (92 ; 128 ; 144 ; 150) en cas d'absence d'un événement attendu.

6. Dispositif selon la revendication 5, **caractérisé en ce que** l'événement attendu est la réception d'un télégramme d'accusé de réception (116 ; 120 ; 124).

7. Dispositif selon la revendication 5 ou 6, **caractérisé en ce que** l'événement attendu est la réception d'un télégramme de vérification (136, 142) émis de manière cyclique.

8. Dispositif selon l'une des revendications 5 à 7, **caractérisé en ce que** l'événement attendu est une possibilité d'émission (152).

9. Dispositif selon l'une des revendications 1 à 8, **caractérisé en ce que** le bus de champ (16) est un bus CAN.

10. Dispositif selon l'une des revendications 1 à 9, **caractérisé en ce qu'**il comporte au moins deux unités de commande (12, 14) sûres pour commander des processus (28, 30, 32) critiques sur le plan de la sécurité, qui sont reliés par un bus de champ (16) commun à au moins une unité de signalisation (18, 20, 22, 24).

11. Dispositif selon la revendication 10, **caractérisé en ce qu'**il comporte en outre une unité de gestion (70) pour coordonner les unités de commande (12, 14) sûres, au moins au nombre de deux.

12. Dispositif selon la revendication 10 ou 11, **caractérisé en ce qu'**aux unités de commande (12, 14) sûres, au moins au nombre de deux, est associée au moins une unité de signalisation (22) commune, une première des unités de commande (12) sûres communiquant directement avec l'unité de signalisation (22) citée, tandis qu'une deuxième des unités de commande (14) sûres communique, à travers la première unité de commande (12), avec l'unité de signalisation (22) citée.
